# EUROPÄISCHE PATENTSCHRIFT

(11) **EP 0 945 202 B1**
(45) Veröffentlichungstag und Bekanntmachung des Hinweises auf die Patenterteilung: **05.06.2002**
(21) Anmeldenummer: 99101565.2
(22) Anmeldetag: 02.02.1999
(51) Int. Cl.: B22F 3/00, B29C 67/00

(54) **Vorrichtung und Verfahren zum Herstellen eines dreidimensionalen Objektes**
Apparatus and method for producing a three-dimensional object
Dispositif et procédé pour la fabrication d'un objet tridimensionnel

(30) Priorität: 27.03.1998 DE 19813742
(43) Veröffentlichungstag der Anmeldung: 29.09.1999
(73) Patentinhaber: EOS GmbH ELECTRO OPTICAL SYSTEMS, 82152 Planegg (DE)
(72) Erfinder: Graf, Bernhard, 86938 Schondorf (DE); Mattes, Thomas, 82110 Germering (DE); Reichmann, Lutz, 07749 Jena (DE)
(74) Vertreter: Prüfer, Lutz H., Dipl.-Phys.

(56) Entgegenhaltungen:
- EP-A- 0 416 852
- GB-A- 2 000 990
- GB-A- 2 014 194

## Beschreibung

Die Erfindung betrifft eine Vorrichtung zum Herstellen eines dreidimensionalen Objektes nach dem Oberbegriff der Patentansprüche 1 und 8 und ein Verfahren zum Herstellen eines dreidimensionalen Objektes nach dem Oberbegriff des Patentanspruchs 8.

Eine Vorrichtung und ein Verfahren zum Herstellen eines dreidimensionalen Objektes durch selektives Lasersintern ist beispielsweise aus der US 4,863,538 bekannt. Dort wird eine vorbestimmte Menge eines pulverförmigen Materials auf eine absenkbare Unterlage gegeben und dort mittels einer über die Unterlage bewegbaren Walze unter gleichzeitiger Rotation der Walze entgegen der Fortbewegungsrichtung verteilt. Danach wird das verteilte Material an den dem Objekt entsprechenden Stellen der so gebildeten Materialschicht bestrahlt, so daß das Material dort zusammensintert.

Aus der WO 95/18715 ist eine Vorrichtung und ein Verfahren zum Herstellen eines dreidimensionalen Objektes und eine Vorrichtung zum Aufbringen einer Schicht eines pulverförmigen Materials auf eine im wesentlichen ebene Oberfläche bekannt.

Der aus der WO 95/18715 bekannte Beschichter weist eine breite untere Austrittsöffnung auf. Dabei besteht das Problem, daß durch das Eigengewicht des Pulvers beim Austritt aus dem Pulverbehälter Kräfte auftreten, die auf bereits sich auf dem Baufeld befindlichen angefangenen. Sinterteile wirken und dazu führen können, daß diese im Pulverbett verschoben werden. Um dies zu verhindern, müssen die Teile an die Bauplattform angebunden werden, beispielsweise mit einer Stützstruktur (support), die nicht zu dem zu bildenden Teil selbst gehört und nach Abschluß des Bauprozesses wieder enffernt werden muß. Dies ist mit Zeitaufwand und Qualitätseinbußen verbunden. Femer benötigt die Supporterstellung ebenfalls Zeit.

Aus der EP-A-0 416 852 ist eine Vorrichtung nach dem Oberbegriff des Patentanspruches 1 bekannt.

Es ist Aufgabe der Erfindung, ein Verfahren und eine Vorrichtung zum Herstellen eines dreidimensionalen Objektes bereitzustellen, mit dem bzw. mit der das Objekt schneller und mit verbesserter Qualität hergestellt werden kann.

Die Aufgabe wird gelöst durch eine Vorrichtung nach dem Patentanspruch 1 und ein Verfahren nach Patentanspruch 8.

Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen:
- Fig. 1: eine schematische Schnittansicht der erfindungsgemäßen Vorrichtung; und
- Fig. 2: eine schematische Schnittansicht der Vorrichtung zum Aufbringen einer Schicht eines pulverförmigen Materials gemäß der Erfindung.

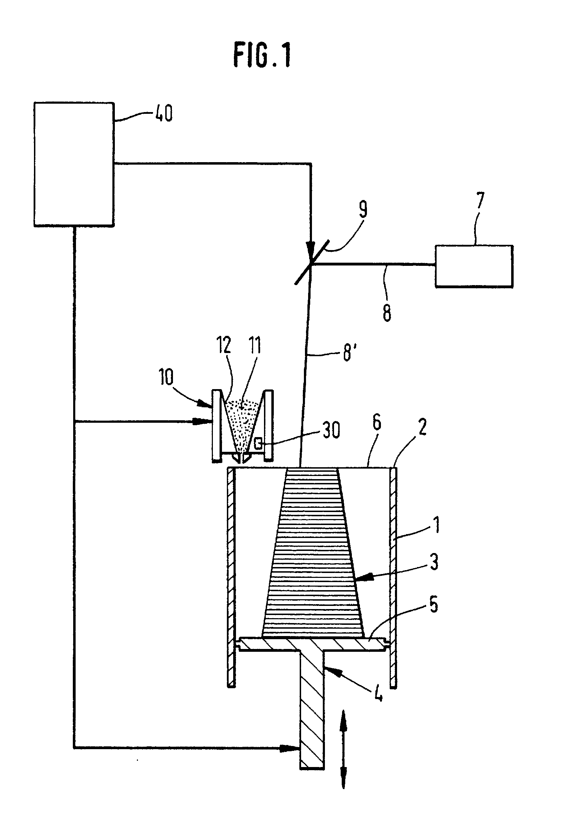

Wie insbesondere aus Fig. 1 ersichtlich ist, weist die Vorrichtung zum Herstellen eines dreidimensionalen Objektes einen nach oben und unten offenen Behälter 1 mit kreisförmigem, quadratischem oder rechteckigem Querschnitt mit einem oberen Rand 2 auf, wobei der Querschnitt des Behälters 1 größer ist als die größte Querschnittsfläche eines herzustellenden Objektes 3. In dem Behälter 1 ist ein Träger 4 zum Tragen des zu bildenden Objektes mit einer im wesentlichen ebenen, dem oberen Rand 2 zugewandten Oberfläche 5 vorgesehen. Der Träger 4 ist mittels einem in Fig. 4 schematisch angedeuteten Antriebes in dem Behälter in vertikaler Richtung auf- und abbewegbar und in seiner Position genau einstellbar. Der obere Rand 2 des Behälters definiert eine Arbeitsebene 6. Oberhalb der Arbeitsebene 6 ist eine Bestrahlungseinrichtung in Form eines Lasers 7 angeordnet, die einen gerichteten Lichtstrahl 8 abgibt. Dieser wird über eine Ablenkeinrichtung 9, beispielsweise einem Drehspiegel, als abgelenkter Strahl 8' in Richtung der Arbeitsebene 6 abgelenkt.

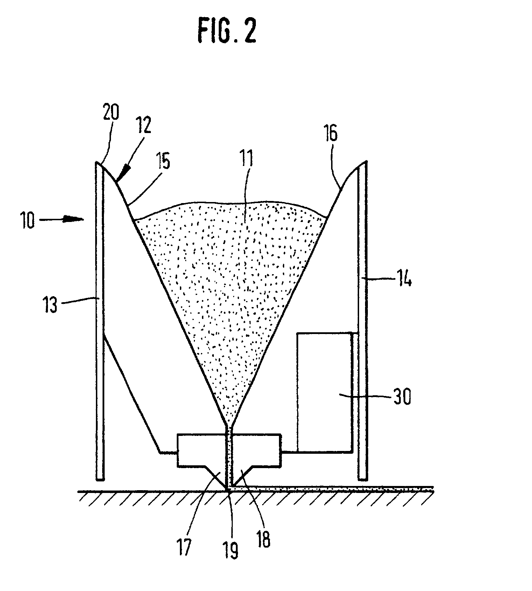

Es ist eine Aufbringvorrichtung 10 zum Aufbringen eines zu verfestigenden Pulvermaterials 11 auf die Trägeroberfläche 5 oder eine zuletzt verfestigte Schicht vorgesehen. Die Aufbringvorrichtung 10 weist einen in Fig. 2 genauer dargestellten Behälter 12 in Form eines langgestreckten Trichters, der sich quer über die von dem oberen Rand 2 des Behälters 1 begrenzte Fläche erstreckt. Der Behälter 12 weist zwei parallel in einem Abstand zueinander angeordnete Seitenwände 13, 14 auf, die sich in vertikaler Richtung erstrecken. Zwischen den Seitenwänden 13, 14 weist der Behälter einen im wesentlichen V-förmigen Querschnitt auf, der von zwei zueinander geneigten Seitenwänden 15, 16 begrenzt ist, wobei sich der Querschnitt nach unten, d.h. in Richtung des oberen Randes 2 des Behälters 1 verjüngt. An ihrem dem oberen Rand 2 des Behälters 1 zugewandten unteren Ende weisen die Seitenwände 15, 16 des so gebildeten trichterförmigen Behälters 12 jeweils eine Klinge 17, 18 auf, wobei durch den Abstand der beiden Klingen 17, 18 zueinander eine schmale Austrittsöffnung für das Pulver 11 aus dem Behälter 12 in Form eines Austrittsspaltes 19 gebildet wird. Die Breite des Austrittsspaltes 19 wird durch Verstellen des Abstandes der Seitenwände 15, 16 eingestellt. Die Klingen 17, 18 können einstückig mit der jeweiligen Seitenwand 15, 16 gebildet sein. Beispielsweise beträgt die Spaltbreite ca. 1 mm bei einer Korngröße von ca. 0,2 mm Der Pulverbehälter 12 ist nach oben hin offen, um das Einfüllen von Pulver zu ermöglichen. Der Austrittsspalt 19 und die obere Öffnung 20 des Behälters erstrecken sich jeweils über im wesentlichen die gesamte Länge des Behälters 12, so daß der gesamte Behälter ein sich nach unten verengender Trichter mit einer Länge, die im wesentlichen dem Durchmesser des oberen Randes 2 des Behälters 1 bzw. der Trägeroberfläche 5 entspricht, gebildet ist.

Die Aufbringvorrichtung 10 ist mittels eines nicht dargestellten Antriebs von einer ersten Endstellung auf einer Seite des Behälters 1 in eine zweite Endstellung auf die gegenüberliegende Seite des Behälters 1 und wieder zurück über den Behälter hin und her bewegbar.

Wie insbesondere aus Fig. 2 ersichtlich ist, ist an einem Ende einer Seitenwand 16 des Behälters 12 angrenzend an die äußere Seitenwand 14 eine Entladeelektrode 30 zum Erzeugen eines elektrischen Feldes angeordnet. Die Entladeelektrode 30 ist in einem der Arbeitsebene 6 zugewandten unteren Bereich des Endes der Seitenwand 16 nahe bei dem Austrittsspalt 19 angebracht. Die Entladeelektrode dient zum Erzeugen eines starken elektrischen Feldes zum Erzeugen von Ionen in der die Vorrichtung umgebenden Atmosphäre. Die Entladeelektrode 30 ist so ausgebildet, daß sie auf ein Potential zwischen etwa +5 kV und -5 kV gebracht werden kann. Weil die Entladeelektrode 30 mit dem Behälter 12 fest verbunden ist, ist sie zusammen mit dem Behälter 12 über die Oberfläche der zu verfestigenden Schicht hin und her verfahrbar.

Der Antrieb zur Höheneinstellung des Trägers 4, der Antrieb zum Verfahren der Aufbringvorrichtung 10 über den Behälter 1 und der Antrieb zum Verstellen der Ablenkeinrichtung 9 werden über eine zentrale Steuerung 40 koordiniert gesteuert.

Im Betrieb wird zunächst vor der Inbetriebnahme der gesamten Vorrichtung der Abstand der Klingen 17, 18 so eingestellt, daß er für das verwendete Pulvermaterial geeignet ist. Als Pulvermaterial wird beispielsweise ein Kunststoff-, Metall- oder Keramikpulver oder ein mit Phenolharz oder mit einem sonstigen thermoplastischen Kunststoff beschichteter Sand, sogenannter Formsand, verwendet. Der Behälter 12 wird vor Beginn des Bauprozesses mit dem Pulver 11 gefüllt. Anschließend wird der Träger 9 mittels der Höheneinstellvorrichtung in die höchste Stellung gefahren, in der die Trägeroberfläche 5 in einem Abstand der Schichtdicke der ersten aufzubringenden Schicht unterhalb des oberen Randes 2 liegt. Dann wird die Aufbringvorrichtung 10 bzw. der Beschichter mittels des Antriebes über die Arbeitsebene 6 verfahren. Dabei tritt das Pulver durch den Austrittsspalt 19 aus und bildet die erste Schicht. Anschließend wird der Laser 7 eingeschaltet und die Ablenkeinrichtung 9 über die Steuerung 40 derart gesteuert, daß der abgelenkte Lichtstrahl nacheinander an allen gewünschten, also dem Objekt an dieser Schicht entsprechenden Stellen der Schicht auftrifft und dort das Pulvermaterial durch Sintern verfestigt.

In einem zweiten Schritt wird die Unterlage um den Betrag der Dicke der nächsten Schicht abgesenkt und wiederum eine Pulverschicht aufgetragen und der Schritt des Bestrahlens an den dem Querschnitt des Objektes in dieser Schicht entsprechenden Stellen wiederholt. Diese Schritte werden so oft wiederholt, bis das Objekt fertiggestellt ist.

Beim Auftragen einer Schicht kann sich durch die Enge des Spaltes 19 das aufzutragende Pulver 11 an den Wänden 15, 16 des Beschichterbehälters 12 abstützen und übt somit kaum noch Kraft auf das unter dem Beschichter liegende Pulverbett mit dem bereits darin gebildeten Sinterteil aus. Zur Realisierung des schmalen Austrittsspaltes 19 des Beschichters ist es vorteilhaft, die elektrostatische Aufladung des Pulverbetts, die sich beim Auftragen neuer Schichten durch Reibung bei bestimmten Materialien zwangsläufig ergibt, abzubauen, damit die Austrittsöffnung 19 nicht durch Anhaften aufgeladener Partikel verstopft wird. Hierzu wird während des gesamten Bauprozesses die an den Beschichter 10 angebrachte Entladeelektrode 30 eingeschaltet, die ein starkes elektrisches Feld erzeugt. Damit werden in der umgebenden Luft lonen erzeugt, die dann zum Abbau der Ladungsunterschiede zwischen den Pulverpartikeln zur Verfügung stehen. Durch das Anbringen der Entladeelektrode direkt an dem Beschichter in der Nähe des Austrittsspaltes ist gewährleistet, daß die gesamte Oberfläche des im Behälter 1 liegenden Pulvers entladen wird und so keine Agglomerate von geladenen Partikeln am Beschichter anhaften und den Austrittsspalt 19 verstopfen. Somit ist ein kontinuierlicher Durchfluß von Pulverpartikeln gegeben.

Abwandlungen der Vorrichtung sind möglich. Es ist möglich, an zwei gegenüberliegenden Enden einer Seitenwand des Behälters jeweils eine Entladeelektrode vorzusehen, um gleichmäßig über die Breite der Arbeitsoberfläche die umgebende Atmosphäre ionisieren zu können. Beispielsweise kann die Entladeelektrode 30 auch als zwei an gegenüberliegenden Seiten des Behälters 1 angeordnete Kondensatorplatten realisiert werden, welche dann ein elektrisches Feld über die gesamte Baufläche hin erzeugen. Es kann sowohl ein stationäres elektrisches Feld als auch ein elektrisches Wechselfeld erzeugt werden. Falls das verwendete Pulver sich nicht oder nur ganz gering auflädt, kann unter Umständen auch auf die Entladeelektrode verzichtet werden und allein der erfindungsgemäße Beschichter mit dem schmalen Austrittsspalt verwendet werden. Zusätzlich können auch an dem Beschichter 10 noch Abstreifelemente vorgesehen sein. Alternativ zum Einstellen der Spaltbreite über die verstellbaren Klingen können die Klingen auch fest an den Seitenwänden montiert sein und die Spaltbreite durch Verschieben der Seitenwände insgesamt zueinander eingestellt werden. Es ist auch denkbar einen austauschbaren Beschichter mit jeweils fester Spaltbreite vorzusehen. Ferner ist es auch möglich, die geraden Seitenwände 13, 14 wegzulassen.

## Patentansprüche

1. Vorrichtung zum Herstellen eines dreidimensionalen Objektes mit
einem Träger (4) zum Tragen des zu bildenden Objektes (3) mit einer im wesentlichen ebenen Oberfläche (5),
einer Vorrichtung (10) zum Aufbringen einer Schicht eines pulverförmigen, durch Einwirkung elektromagnetischer Strahlung verfestigbaren Materials (11) auf die Oberfläche und
einer Bestrahlungseinrichtung (7) zum Bestrahlen des Materials (11) an den dem Objekt (3) entsprechenden Stellen der Schicht, und
einer Einrichtung (30) zum Erzeugen eines elektrischen Feldes zum Abbau von Ladungsunterschieden auf den Pulverpartikeln, wobei
die Vorrichtung zum Aufbringen einer Schicht (10) einen über die Oberfläche (5) verfahrbaren Behälter (12) mit einer spaltförmigen Austrittsöffnung umfaßt
**dadurch gekennzeichnet daß**, die Einrichtung (30) zum Erzeugen eines elektrischen Feldes an dem Behälter angebracht ist.

2. Vorrichtung nach Anspruch 1, **dadurch gekennzeichnet, daß** die Einrichtung (30) als Entladeelektrode ausgebildet ist.

3. Vorrichtung nach Anspruch 1 oder 2, **dadurch gekennzeichnet, daß** die Einrichtung (30) ein stationäres elektrisches Feld oder ein elektrisches Wechselfeld erzeugt.

4. Vorrichtung nach einem der Ansprüche 1 bis 3, **dadurch gekennzeichnet, daß** der Behälter (12) einen Trichter mit sich in Richtung der Oberfläche (5) hin verjüngenden V-förmigen Querschnitt umfaßt.

5. Vorrichtung nach einem der Ansprüche 1 bis 4, **dadurch gekennzeichnet, daß** die Austrittsöffnung (19) für das Pulver sich quer über die Oberfläche (5) erstrecket und eine einstellbare Breite aufweist.

6. Vorrichtung nach Anspruch 5, **dadurch gekennzeichnet, daß** die Austrittsöffnung (19) durch zwei in einem Abstand voneinander an dem Behälter (12) angeordnete und zueinander im Abstand einstellbare Klingen (17, 18) gebildet ist.

7. Vorrichtung nach Anspruch 5 oder 6, **dadurch gekennzeichnet, daß** die Breite der Austrittsöffnung weniger als das Zehnfache des durchschnittlichen Durchmessers der Pulverpartikel beträgt.

8. Verfahren zum Herstellen eines dreidimensionalen Objektes unter Verwendung der Vorrichtung nach einem der Ansprüche 1 bis 7, bei dem das Objekt (3) schichtweise dadurch erzeugt wird, daß jeweils eine Schicht durch Bestrahlen mit elektromagnetischer Strahlung verfestigbaren, pulverförmigen Material (11) aufgetragen und anschließend an den dem Objekt (3) entsprechenden Stellen durch Bestrahlen verfestigt wird, wobei
ein elektrisches Feld zum Abbau von Ladungsunterschieden zwischen den Pulverpartikeln erzeugt wird.

9. Verfahren nach Anspruch 8, **dadurch gekennzeichnet, daß** das elektrische Feld während des gesamten Bauprozesses erzeugt wird.

10. Verfahren nach Anspruch 9, **dadurch gekennzeichnet, daß** das elektrische Feld nur beim Beschichten erzeugt wird.

## Claims

1. Apparatus for producing a three-dimensional object, with
a support (4) for supporting the object (3) to be formed, with a substantially planar surface (5),
a device (10) for applying to the surface a layer of a powdered material (11) which can be solidified by exposure to electromagnetic radiation and
an irradiating device (7) for irradiating the material (11) at the locations of the layer corresponding to the object (3), and
a device (30) for generating an electric field for eliminating differences in charge on the powder particles,
the device for applying a layer (10) comprising a container (12) which can be moved over the surface (5) and has a gap-shaped outlet opening, **characterized in that**
the device (30) for generating an electric field is attached to the container.

2. Apparatus according to Claim 1, **characterized in that** the device (30) is designed as a discharging electrode.

3. Apparatus according to Claim 1 or 2, **characterized in that** the device (30) generates a steady-state electric field or an alternating electric field.

4. Apparatus according to one of Claims 1 to 3, **characterized in that** the container (12) comprises a funnel with a V-shaped cross section, narrowing in the direction of the surface (5).

5. Apparatus according to one of Claims 1 to 4, **characterized in that** the outlet opening (19) for the powder extends transversely over the surface (5) and has an adjustable width.

6. Apparatus according to Claim 5, **characterized in that** the outlet opening (19) is formed by two blades (17, 18) which are arranged at a distance from each other on the container (12) and can be adjusted in their distance in relation to each other.

7. Apparatus according to Claim 5 or 6, **characterized in that** the width of the outlet opening is less than ten times the average diameter of the powder particles.

8. Method for producing a three-dimensional object using the apparatus according to one of Claims 1 to 7, in which the object (3) is produced layer by layer in that a layer is respectively applied by irradiating powdered material (11) which can be solidified by irradiating with electromagnetic radiation and is subsequently solidified by irradiating at the locations corresponding to the object (3),
an electric field being generated to eliminate differences in charge between the powder particles.

9. Method according to Claim 8, **characterized in that** the electric field is generated during the entire construction process.

10. Method according to Claim 9, **characterized in that** the electric field is generated only during the coating.

## Revendications

1. Dispositif pour la fabrication d'un objet tridimensionnel comprenant un support (4) portant l'objet (3) à fabriquer et possédant une surface (5) sensiblement plane, un dispositif (10) pour l'application sur la surface d'une couche d'un matériau (11) pulvérulent pouvant être solidifié sous l'action d'un rayonnement électromagnétique, un dispositif d'irradiation (7) pour l'exposition du matériau (11) en des points de la couche correspondant à l'objet (3) et un dispositif (30) destiné à produire un champ électrique afin d'éliminer les différences de charge entre les particules de poudre, dans lequel le dispositif d'application d'une couche (10) comprend un réservoir (12) mobile au-dessus de la surface (5) et possédant une ouverture de sortie en forme de fente, **caractérisé en ce que** le dispositif (30) destiné à produire un champ électrique est disposé sur le réservoir.

2. Dispositif selon la revendication 1, **caractérisé en ce que** le dispositif (30) est conçu comme une électrode de décharge.

3. Dispositif selon la revendication 1 ou 2, **caractérisé en ce que** le dispositif (30) produit un champ électrique constant ou alternatif.

4. Dispositif selon l'une ou l'ensemble des revendications 1 à 3, **caractérisé en ce que** le réservoir (12) comprend une trémie dont la section se resserre en forme de V en direction de la surface (5).

5. Dispositif selon l'une ou l'ensemble des revendications 1 à 4, **caractérisé en ce que** l'ouverture (19) de sortie de la poudre s'étend perpendiculairement à la surface (5) au-dessus de celle-ci et présente une largeur réglable.

6. Dispositif selon la revendication 5, **caractérisé en ce que** l'ouverture de sortie (19) est formée par deux lames (17, 18) disposées à distance l'une de l'autre sur le réservoir (12) et ajustables l'une par rapport à l'autre.

7. Dispositif selon la revendication 5 ou 6, **caractérisé en ce que** la largeur de l'ouverture de sortie correspond à moins de dix fois le diamètre moyen des particules de poudre.

8. Procédé de fabrication d'un objet tridimensionnel utilisant le dispositif selon l'une ou l'ensemble des revendications 1 à 7, dans lequel l'objet (3) est produit couche après couche par le fait qu'une couche de matériau (11) pulvérulent pouvant être solidifié par exposition à un rayonnement électromagnétique est appliquée puis solidifiée aux endroits correspondants par irradiation, dans lequel un champ électrique est produit pour éliminer les différences de charge entre les particules de poudre.

9. Procédé selon la revendication 8, **caractérisé en ce que** le champ électrique est produit pendant tout le processus de fabrication.

10. Procédé selon la revendication 9, **caractérisé en ce que** le champ électrique est produit uniquement lors de l'application.
